# EUROPEAN PATENT SPECIFICATION

(11) **EP 1 030 552 B1**
(45) Date of publication and mention of the grant of the patent: **13.06.2001**
(21) Application number: 98963449.8
(22) Date of filing: 12.11.1998
(51) Int. Cl.: A01K 5/00, B01F 7/00, B01F 15/00, B65G 33/24, A01F 29/00, A01D 75/18

(54) **CUTTING-MIXING-FEEDING WAGON FOR FORAGE AND GRASS OR STRAW SILAGE WITH SCREW FEEDERS PROVIDED WITH SCRAPING PADDLES**
ANHÄNGER ZUM ZERKLEINERN, MISCHEN UND VERTEILEN VON FUTTER, GRAS ODER HEUSILAGE MIT ZUFÜHRSCHNECKEN MIT KRATZSCHAUFELN
REMORQUE DE COUPE-BRASSAGE-DISTRIBUTION DE FOURRAGE ET HERBE OU D'ENSILAGE A BASE DE PAILLE DOTEE D'UN DISTRIBUTEUR A VIS POURVU DE PALETTES DE RACLAGE

(30) Priority: 13.11.1997 IT VI970072 U
(43) Date of publication of application: 30.08.2000
(73) Proprietor: Loppoli, Giuseppe, 35010 Grantorto (IT)
(72) Inventor: Loppoli, Giuseppe, 35010 Grantorto (IT)
(74) Representative: Bonini, Ercole
(86) International application number: EP9807256
(87) International publication number: WO9925182

(56) References cited:
- EP-A- 0 619 064
- WO-A-97/17841

## Description

The invention concerns a cutting-mixing-feeding wagon for forage and grass or straw silage in which there are some screw feeders provided with scraping paddles.

It is known that the cutting-mixing-feeding wagons for forage and grass or straw silage generally consist of a container in which there are one or more rotating screw feeders, placed preferably in the lower part of the container, cutting and mixing by rotation the vegetable products put inside the container itself.

During the cutting and mixing operations the products, according to the qualiy and the humidity degree, tend to clog more or less easily and that is the reason why particular devices are adopted. They consists for example in shaping particularly the screw feeders and the inside surfaces of the container, in order to avoid such cloggings.

Precisely it has been observed that one of the areas where the cloggings occur easily is relative to the screw feeders ends where they are coupled to the wagon walls through some flanges covering the bearings on which they are assembled.

In fact in such areas the small space between the terminal spiral of the screw feeder and the wagon wall, together with the protection flange of the supporting bearing of the screw feeder, help the accumulation of the processing product.

Document WO-A-9717841 discloses a cutting-mixing-feeding wagon with screw feeders, but no means are provided to prevent the clogging of the product to be processed into the wagon.

The present invention intends to overcome such a limitation by establishing optimum conditions in order to avoid material accumulations in correspondence with each screw feeder end.

The said aim is achieved through the realization of a cutting-mixing-feeding wagon for forage and grass or straw silage which, according to the main claim, includes:
- a container provided with at least one opening for inserting the material to be treated and at least one door for unloading the treated material;
- one or more screw feeders housed inside said container, each one whereof is provided with at least a couple of spirals axially opposed and wound the one clockwise and the other counterclockwise beginning from each end of the screw feeder itself and is characterized in that each screw feeder has in correspondence with each end a scraping element cooperating through a crawling with the external surface of a flange put between said screw feeder end and the wall of said container.

According to a preferred embodiment said scraping element consists of a paddle fixed to the screw feeder end and to the spiral end wound on it and has a shaped profile that during the screw feeder rotation, skims the external surface of the flange put between the screw feeder end and the container wall and acts as a protection cover for the bearing supporting the screw feeder end itself.

Advantageously said plaque rim opposed to the internal wall of the container supporting the screw feeder end, is slanting so that it shapes an acute angle outlined tooth penetrating in the material and preventing its accumulation.

The invention is described below according to a preferred embodiment given approximately but not restrictively referring to the enclosed drawings where:
- fig. 1 shows the longitudinal section of the wagon aimed by the invention;
- fig. 2 shows an axonometric view of detail of an screw feeder end of fig. 1 wagon;
- fig. 3 shows an enlarged detail belonging to an end of one of the screw feeders shown in fig. 2.

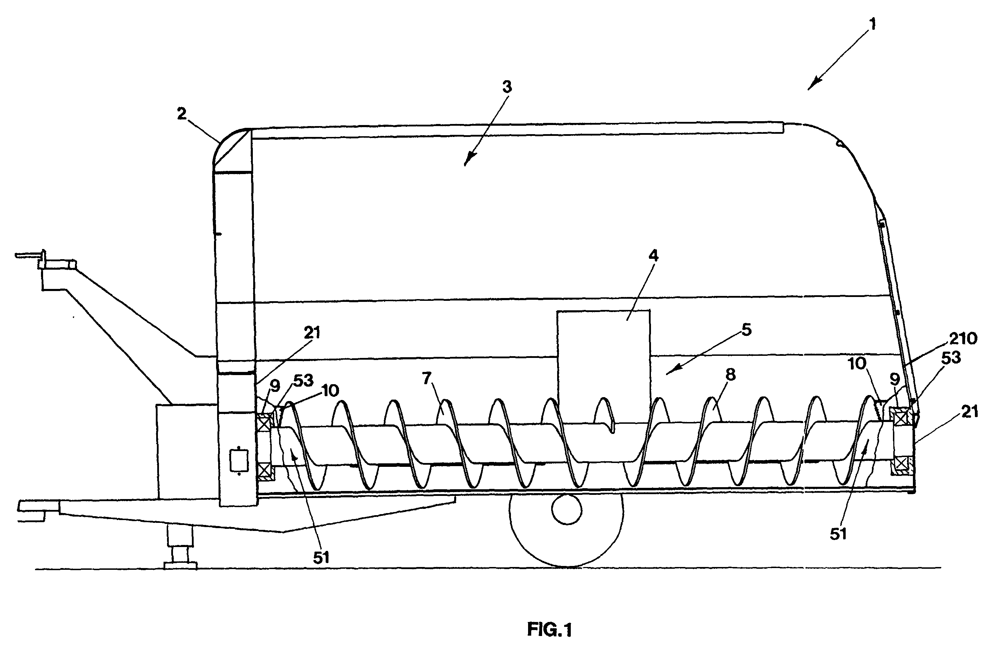

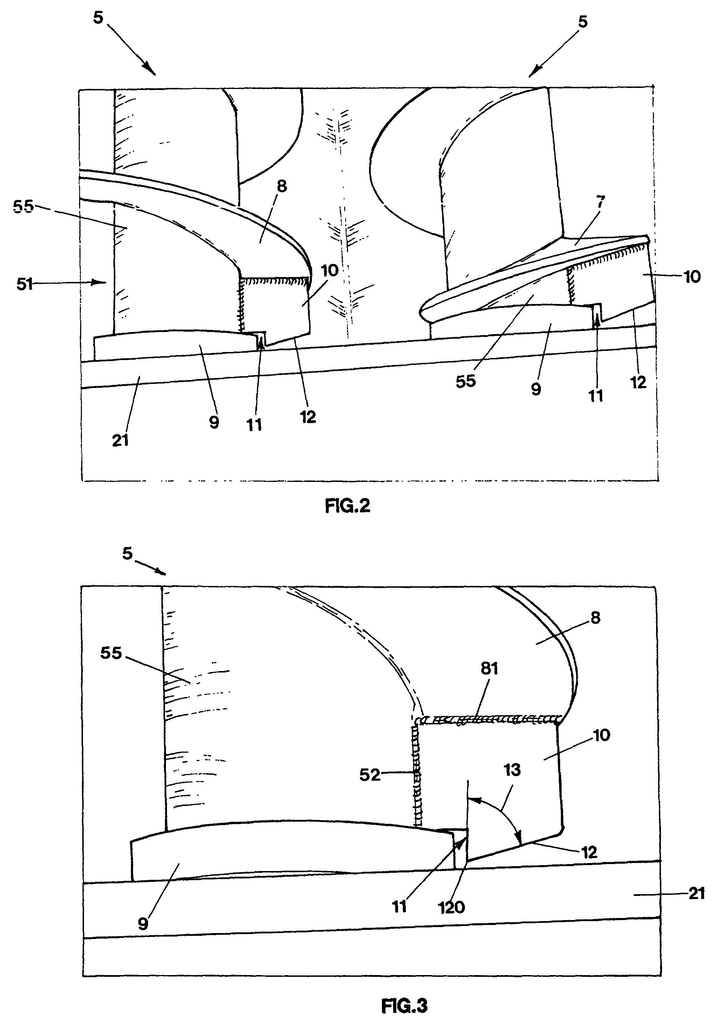

As it can be observed in fig. 1 the cutting-mixing-feeding wagon of the invention, marked with 1 as a whole, includes:
- a container 2 provided with an upper opening 3 for inserting the material to be treated and with a lateral door 4 for the treated material unloading;
- a couple of screw feeders 5, visible in fig. 2 too, housed inside said container 2, each one whereof is provided with a couple of spirals 7 and 8 axially opposed to one another and wound the one clockwise 7 and the other counterclockwise 8 beginning from the end of the screw feeder 5 to which each spiral belongs.

Between each screw feeder 5 end 51 and the corresponding end wall 21 of the container, a flange 9 is placed. Said flange 9 protects the bearing 53 supporting the screw feeder end itself.

It is in such an area that the processing material tends to accumulate anf that is the reason why a scraping element is placed there. Said scraping element consists of a paddle 10 which is fixed at the spiral 7 and 8 end preferably through a first welding 81, and to the core 55 of the screw feeder 5 through a second welding 52.

It can be observed that each paddle 10 has a shaped profile 11 cooperating through a crawling with the external profile of the flange 9 joined to it, carrying out, when the screw feeder rotates, a scraping action keeping the flange 9 free from the product accumulation.

Moreover the rim 12 of the paddle 10 opposed to the wall 21 of the container 2, is slanting with respect to the wall 21 itself so that it shapes an acute angle 13 outlined tooth 120 which, during the screw feeder rotation, prevents the contact of the paddle 10 with the back wall 210 of the container 2, which, as it can be observed in fig. 1, is slanting.

In the description a single paddle 10 applied to the end 51 of each screw feeder 5 has been mentioned but it is clear that in order to improve the scraping effect said paddles could also be more than one.

Finally as regards said scraping paddles, they can be applied to any type of screw feeder, apart from its profile and from the fact that said screw feeder cooperates, inside the cutting-mixing-feeding wagon it is applied to, through scraping inverted blades or with other devices suitable to improve the cutting and the mixing of the product to be processed.

It is also clear that it will be possible to realize the scraping paddle with different profiles with respect to those which has been described, provided that they are suitable to carry out the scraping action by joining the external profile of the flange corresponding to them.

## Claims

1. A cutting-mixing-feeding wagon (1) for forage and grass or straw silage comprising:
- a container (2) provided with at least one opening (3) for inserting the material to be treated and at least one door (4) for unloading the treated material;
- one or more screw feeders (5) housed inside said container (2), each one whereof is provided with at least a couple of spirals (7, 8) axially opposed and wound the one clockwise (7) and the other counterclockwise (8) beginning from each end (51) of the screw feeder (5), **characterized in that** each screw feeder (5) has in correspondence with each end (51) a scraping element (10) cooperating through a crawling with the external surface of a flange (9) put between the end (51) of said screw feeder (5) and the wall (21) of said container (2).

2. A cutting-mixing-feeding wagon (1) according to claim 1) **characterized in that** said scraping element is formed by at least a paddle (10) having an profile (11) joined to the external surface of said flange (9) put between said end (51) of said screw feeder (5) and said wall (21) of said container (2).

3. A cutting-mixing-feeding wagon (1) according to claim 2) **characterized in that** each paddle (10), in correspondence with the end (51) of each said screw feeders (5), is fixed both to said spiral (7, 8) and to said core (55) of said screw feeder (5).

4. A cutting-mixing-feeding wagon (1) according to claim 2) **characterized in that** each one of said paddles (10) has a rim (12) opposed to said wall (21) of said container (2), slanting with respect to the wall (21) so that it shapes an acute angle (13) outlined tooth (120).

5. A cutting-mixing-feeding wagon (1) according to claim 3) **characterized in that** each one of said paddles (10) is fixed to said spiral (7, 8) and to said core (55) of said screw feeder (5) through weldings (81, 52).

## Patentansprüche

1. Schneid-Mix-Zufuhrwagen (1) für Futter und Gras oder Strohsilage, folgendes umfassend:
- einen Behälter (2) mit wenigstens einer Öffnung (3) zum Einfüllen des zu verarbeitenden Materials und mit wenigstens einer Tür (4) zur Entladung des verarbeiteten Materials;
- einem oder mehreren, in dem Behälter (2) untergebrachten Schneckenzuführer (5), von denen jeder mit wenigstens einem Paar einander axial entgegengesetzten Spiralen (7, 8) versehen ist, von denen eine im Uhrzeigersinn (7) und die andere gegen den Uhrzeigersinn (8) gewunden ist, ausgehend von jedem Ende (51) des Schneckenzuführers (5), **dadurch gekennzeichnet, dass** jeder Schneckenzuführer (5) in Entsprechung mit jedem Ende (51) ein Schabeelement (10) aufweist, das streifend mit der Außenfläche eines zwischen dem Ende (51) des Schneckenzuführers (5) und der Wand (21) des Behälters (2) befindlichen Flansches (9) zusammenwirkt.

2. Schneid-Mix-Zufuhrwagen (1) gemäß Patentanspruch 1), **dadurch gekennzeichnet, dass** das Schabeelement aus wenigstens einer Schaufel (10) mit einem Profil (11) besteht, das mit der Außenfläche des Flansches (9) zwischen dem Ende (51) des Schneckenzuführers (5) und der Wand (21) des Behälters (2) verbunden ist.

3. Schneid-Mix-Zufuhrwagen (1) gemäß Patentanspruch 2), **dadurch gekennzeichnet, dass** jede Schaufel (10) in Entsprechung mit dem Ende (51) jeden Schneckenzuführers (5) sowohl an der Spirale (7, 8) als auch am Kern (55) des Schneckenzuführers (5) befestigt ist.

4. Schneid-Mix-Zufuhrwagen (1) gemäß Patentanspruch 2), **dadurch gekennzeichnet, dass** jede der Schaufeln (10) einen Rand (12) aufweist, der der Wand (21) des Behälters (2) gegenüber liegt und bezüglich der Wand (21) abgeschrägt ist, so dass er einen Zahn (120) mit spitzwinkligem Umriss (13) formt.

5. Schneid-Mix-Zufuhrwagen (1) gemäß Patentanspruch 3), **dadurch gekennzeichnet, dass** jede der Schaufeln (10) mit Schweißungen (81, 52) an der Spirale (7, 8) und am Kern (55) des Schneckenzuführers (5) befestigt ist.

## Revendications

1. Un chariot découpeur-mélangeur-distributeur (1) pour fourrage et ensilés d'herbe ou de paille comprenant :
- un conteneur (2) équipé d'au moins une ouverture (3) pour l'introduction du matériel à traiter et d'au moins une porte (4) pour le déchargement du matériel à traiter;
- une ou plusieurs vis transporteuses (5) logées à l'intérieur dudit conteneur (2), chacune desquelles est munie d'au moins un couple de spirales (7, 8) opposée en direction axiale et l'une enroulée dans le sens des aiguilles d'une montre (7) et l'autre dans le sens contraire des aiguilles d'une montre (8) à partir de chaque extrémité (51) de la vis transporteuse (5), **caractérisé en ce que** chaque vis transporteuse (5) présente à hauteur de chaque extrémité (51) un élément de raclage (10) interagissant par frottement avec la surface externe d'une bride (9) positionnée entre l'extrémité (51) de ladite vis transporteuse (5) et la paroi (21) dudit conteneur (2).

2. Un chariot découpeur-mélangeur-distributeur (1) selon la revendication 1) **caractérisé en ce que** ledit élément de raclage est constitué d'au moins une spatule (10) ayant un profil (11) relié à la surface externe de ladite bride (9) positionnée entre ladite extrémité (51) de ladite vis transporteuse (5) et ladite paroi (21) dudit conteneur (2).

3. Un chariot découpeur-mélangeur-distributeur (1) selon la revendication 2) **caractérisé en ce que** chaque spatule (10), à hauteur de l'extrémité (51) de chaque vis transporteuse (5), est fixée aussi bien à ladite spirale (7, 8) qu'à un noyau (55) de ladite vis transporteuse (5).

4. Un chariot découpeur-mélangeur-distributeur (1) selon la revendication 2) **caractérisé en ce que** chacune desdites spatules (10) a un bord (12) opposé à ladite paroi (21) dudit conteneur (2), incliné par rapport à la paroi (21) de manière à former une dent modelée (120) avec profil à angle aigu (13).

5. Un chariot découpeur-mélangeur-distributeur (1) selon la revendication 3) **caractérisé en ce que** chacune desdites spatules (10) est fixée à ladite spirale (7, 8) et audit noyau (55) de ladite vis transporteuse (5) au moyen de soudures (81, 52).
